# EUROPÄISCHE PATENTSCHRIFT

(11) **EP 3 103 543 B1**
(45) Veröffentlichungstag und Bekanntmachung des Hinweises auf die Patenterteilung: **22.09.2021**
(21) Anmeldenummer: 16179925.9
(22) Anmeldetag: 16.02.2010
(51) Int. Cl.: B01D 46/10, B01D 46/00

(54) **FILTERELEMENT UND FILTEREINRICHTUNG ZUR FILTRATION GASFÖRMIGER FLUIDE**
FILTER ELEMENT AND FILTER DEVICE FOR FILTERING GASEOUS FLUIDS
ÉLEMENT DE FILTRE ET DISPOSITIF DE FILTRE DESTINÉ À LA FILTRATION DE FLUIDES GAZEUX

(30) Priorität: 16.02.2009 DE 202009002178 U
(43) Veröffentlichungstag der Anmeldung: 14.12.2016
(62) Teilanmeldung aus: 10153673.8
(73) Patentinhaber: MANN+HUMMEL GmbH, 71636 Ludwigsburg (DE)
(72) Erfinder: WEBER, Andreas, 71691 Freiberg a. N. (DE); DIRNBERGER, Timo, 71672 Marbach (DE)
(74) Vertreter: Mann + Hummel Intellectual Property

(56) Entgegenhaltungen:
- EP-A1- 2 119 497
- EP-A1- 3 002 021
- EP-A1- 3 514 297
- DE-A1- 19 859 854
- GB-A- 2 162 087
- US-A- 4 498 989

## Beschreibung

### Technisches Gebiet

Die Erfindung bezieht sich auf eine Filtereinrichtung zur Filtration gasförmiger Fluide, insbesondere auf einen Luftfilter in Kraftfahrzeugen, nach dem Oberbegriff des Anspruches 1.

### Stand der Technik

In der DE 196 38 790 A1 wird ein Ansaugluftfilter für eine Brennkraftmaschine beschrieben, bestehend aus einem als Einsatzteil ausgebildeten Filterelement in einem Filtergehäuse. Das Filtergehäuse weist einen Gehäusegrundkörper und einen öffenbaren Deckel auf, der um eine Achse schwenkbar am Gehäusegrundkörper gelagert ist. Bei abgenommenem Deckel kann das Filterelement in das Gehäuseinnere eingesetzt bzw. aus diesem entnommen werden. Das Filterelement ist von einem Rahmen eingefasst, an dem ein Dichtelement angeordnet ist, das im Gehäuseinneren in Dichtanlage mit einer Gehäuseinnenwand steht, um die Roh- von der Reinseite des Filterelements druckdicht zu separieren.

Die Schrift DE 198 59 854 A1 offenbart einen Filter mit Versteifungen an den Gehäuseschalen. Die Versteifungen bestehen aus einer Stütze. Die Gehäuseteile sind mit einer Verbindungsschraube fest verbunden. Die Stützen haben direkten Kontakt miteinander, wobei eine Zusatzdichtung das Filterelement und Roh- und Reinluftseite zur Stütze hin abdichtet. In der US 4 498 989 A ist ein Luftfilter beschrieben, der aus zwei Gehäuseteilen besteht, zwischen denen ein rundes Filterelement eingelegt ist. Zwischen Gehäuseoberteil und einem ringförmigen Rahmen zur Elementaufnahme ist eine ringförmige Dichtung aufgenommen.

Dieser Luftfilter zeichnet sich durch einfache Austauschbarkeit des Filterelementes aus. Um einer Schallentwicklung entgegenzusteuern, die bei einem Einbau des Luftfilters im Ansaugtrakt der Brennkraftmaschine auf Grund von Motorvibrationen sowie Druckschwankungen aus dem Motor durch Vibrationen des Gehäuses und/oder des Filterelementes entstehen können, können als Verspannungsmaßnahmen zusätzliche Befestigungselemente vorgesehen sein, über die das Filterelement fest mit den Gehäuseteilen zu verbinden ist, beispielsweise über Zuganker, die das Filterelement durchragen. Nachteilig hierbei ist allerdings, dass zum Austausch des Filterelementes die Befestigungseinrichtung gelöst werden muss, was jedoch auf Grund der beengten Platzverhältnisse im Motorraum nur möglich ist, wenn das gesamte Filtergehäuse herausgenommen wird. Dies stellt jedoch einen erheblichen Montageaufwand dar.

Der Erfindung liegt die Aufgabe zugrunde, mit einfachen konstruktiven Maßnahmen eine Filtereinrichtung zur Filtration gasförmiger Fluide montagefreundlich auszubilden, wobei zugleich das Filterelement im montierten Zustand zur Reduzierung von Schwingungen mit dem Filtergehäuse verspannt sein soll.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung zur Filtration gasförmiger Fluide wird insbesondere als Ansaugluftfilter im Ansaugtrakt von Brennkraftmaschinen zur Filtration der den Zylindern der Brennkraftmaschine zuzuführenden Verbrennungsluft eingesetzt. Grundsätzlich kommt aber auch eine anderweitige Verwendung für die Filtration von Gasen in Betracht, beispielsweise zur Filtration der dem Fahrzeuginnenraum zuzuführenden Luft.

Die Filtereinrichtung weist ein mehrteiliges Gehäuse sowie ein in das Gehäuse einsetzbares Filterelement auf, wobei im montierten Zustand die Gehäuseteile miteinander verbunden sind. Erfindungsgemäß ist eine das Filterelement durchsetzende Verbindungseinrichtung zur Verbindung der Gehäuseteile vorgesehen, wobei die Verbindungseinrichtung mindestens einen einteilig mit einem Gehäuseteil ausgebildeten Gehäusedom und ein Dämpfungselement umfasst, das zwischen der Stirnseite des Gehäusedoms und dem gegenüberliegenden Gehäuseteil angeordnet ist.

Diese Ausführung erlaubt ein Verspannen zwischen dem Filterelement und den Gehäuseteilen, von denen mindestens ein Gehäuseteil einen Gehäusedom aufweist, welcher einteilig mit dem Gehäuseteil ausgebildet ist und in das Filterelement einragt, bzw. durch dieses hindurchragt. Zwischen dem Gehäusedom und dem zweiten Gehäuseteil liegt das Dämpfungselement, so dass trotz eines Druckkontaktes zwischen den Gehäuseteilen Schwingungen stark gedämpft werden. Zugleich ist das Filterelement quer zur Längsachse des Gehäusedoms von diesem fixiert, so dass auch in Querrichtung die Ausbildung von Geräusch entwickelnden Schwingungen signifikant reduziert ist.

Der durch das Filterelement zumindest teilweise hindurchragende Gehäusedom liegt vorteilhafterweise lediglich auf Druckkontakt zum gegenüberliegenden Gehäuseteil, so dass eine einfach lösbare Verbindung zwischen den Gehäuseteilen gegeben ist, die lediglich Druckkräfte über das zwischenliegende Dämpfungselement überträgt, jedoch keine Zugkräfte. Diese Ausführung hat den Vorteil, dass sowohl die Montage als auch die Demontage des Filterelements im Filtergehäuse mit einfachen und schnell durchzuführenden Maßnahmen und ohne Hilfswerkzeug möglich ist. Es genügt, das Filterelement in die vorgesehene Position im Gehäuseinneren einzusetzen und anschließend das Gehäuseteil einzuführen und den daran angeformten Gehäusedom durch die Ausnehmung im Filterelement hindurchzuführen, wobei ggf. zusätzliche Befestigungselemente zur Arretierung der Gehäuseteile aneinander im außen liegenden Bereich des Filtergehäuses vorgesehen sein können, beispielsweise manuell zu öffnende und zu schließende Klammern. Auf diese Weise werden die Gehäuseteile auf gegenseitigen Druck belastet, so dass der durch die Ausnehmung im Filterelement hindurchragende Gehäusedom einen Druck auf das zwischenliegende Dämpfungselement und weiter auf das gegenüberliegende Gehäuseteil ausübt. Durch die hierbei erzielte Verspannung wird die Schwingungsentwicklung signifikant reduziert bzw. unterbunden.

Umgekehrt ist eine Demontage, also ein Entnehmen des Filterelementes aus dem Filtergehäuse, mit einfachen Maßnahmen möglich, da lediglich die äußeren Befestigungseinrichtungen gelöst werden müssen, damit das den Gehäusedom aufweisende Gehäuseteil aus seiner Montageposition entfernt werden kann. Da der Gehäusedom nur auf Kontakt zum Dämpfungselement liegt und/oder das Dämpfungselement auf Kontakt zum gegenüberliegenden Gehäuseteil, kann das erste, den Gehäusedom aufweisende Gehäuseteil oder das gegenüberliegende Gehäuseteil ohne Hilfsmittel entfernt werden.

Es kann zweckmäßig sein, auch an dem zweiten Gehäuseteil einen Gehäusedom anzuformen, wobei die Stirnseiten der beiden Gehäusedome einander zugewandt und koaxial zueinander ausgerichtet sind und das Dämpfungselement zwischen den Stirnseiten der Gehäusedome positioniert ist.

Gegebenenfalls ist es zweckmäßig, das Dämpfungselement mit einem der Gehäuseteile, insbesondere mit einem Gehäusedom zu verbinden, beispielsweise dergestalt, dass in die Stirnseite des Gehäusedoms eine Ausnehmung eingebracht ist, in die das Dämpfungselement einsetzbar ist. Hierdurch wird eine vorgefertigte Verbindung zwischen Gehäusedom und Dämpfungselement erreicht, was die Montage vereinfacht.

Möglich ist aber auch, das Dämpfungselement unmittelbar in die Ausnehmung in dem Filterelement einzusetzen und anschließend zur Montage den mindestens einen Gehäusedom auf Kontakt zu dem Dämpfungselement zu bringen.

Im Falle von zwei Gehäusedomen, die in Montageposition Stirnseite an Stirnseite mit zwischenliegendem Dämpfungselement angeordnet sind, ragt zumindest einer der Gehäusedome in die Ausnehmung in dem Filterelement ein, wobei der zweite Gehäusedom entweder ebenfalls teilweise in die Ausnehmung einragt oder sich nur in Nachbarschaft zur Außenseite des Filterelementes befindet.

Das Dämpfungselement ist als Dämpfungsstopfen bzw. Dämpfungspfropfen ausgeführt und besteht aus einem schwingungsdämpfenden Material, beispielsweise Polyurethan (PUR). In der Ausführung als PUR-Schaum wird das Dichtmaterial in die Ausnehmung eingegossen. Spritzfähiges Dichtmaterial kann auch an das Filterelement angespritzt sein.

Das Filterelement weist mindestens eine Ausnehmung zur Verspannung mithilfe des Gehäusedoms auf. Es kann aber zweckmäßig sein, eine Mehrzahl von beabstandeten Ausnehmungen im Filterelement vorzusehen, in die jeweils ein oder zwei Gehäusedome einragen, um über eine größere Fläche eine Verspannung zwischen Filterelement und Gehäuseteilen zu erreichen und hierdurch die

Schwingungsreduzierung zu verbessern.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Ansicht einer Filtereinrichtung zur Filtration der Ansaugluft in Brennkraftmaschinen, mit einem mehrteiligen Filtergehäuse zur Aufnahme eines Filterelementes,
Fig. 2 in perspektivischer Einzeldarstellung ein nicht erfindungsgemäßes Filterelement mit einem Dämpfungspfropfen, der in eine Ausnehmung eingesetzt ist, die in das Zentrum des Filterelementes eingebracht ist,
Fig. 3 in vergrößerter Darstellung einen Schnitt durch das Filterelement, mit den beiden Gehäuseteilen des Filtergehäuses, an denen jeweils ein Gehäusedom angeformt ist, wobei einer der Gehäusedome durch die Ausnehmung in dem Filterelement hindurchragt und zwischen den Stirnseiten der koaxial angeordneten Gehäusedome ein Dämpfungselement angeordnet ist,
Fig. 4 einen weiteren Schnitt durch eine nicht erfindungsgemäße Filtereinrichtung,
Fig. 5 eine weitere perspektivische Einzeldarstellung eines Filterelementes in alternativer Ausführung.

In den Figuren sind gleiche Bauteile mit gleichen Bezugszeichen versehen.

### Ausführungsformen der Erfindung

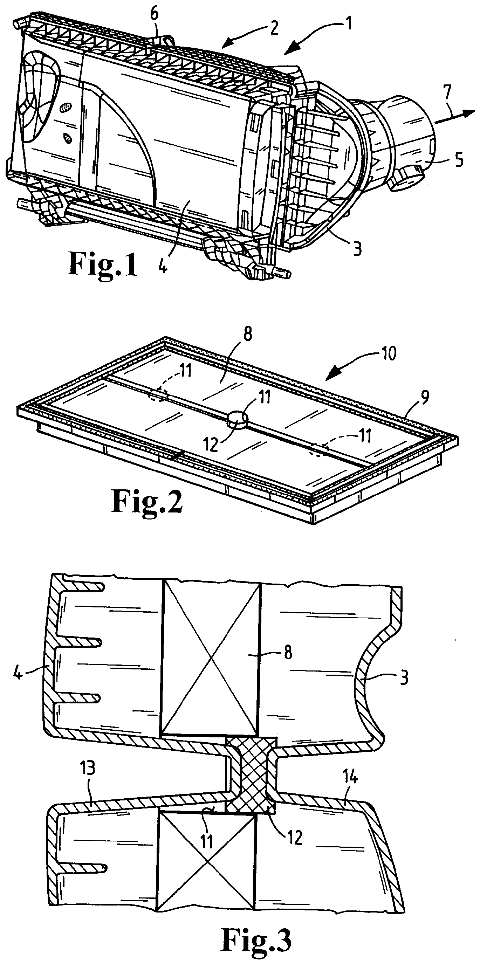

Wie Fig. 1 zu entnehmen, besteht die Filtereinrichtung 1 zur Filtration der Ansaugluft in Brennkraftmaschinen aus einem zweiteiligen Filtergehäuse 2, das sich aus einem reinluftseitigen Gehäuseteil 3 und einem rohluftseitigen Gehäuseteil 4 zusammensetzt. In dem Gehäuseinneren des Filtergehäuses 2 ist ein Element zur Filtration der herangeführten Verbrennungsluft angeordnet. Das reinluftseitige Gehäuseteil 3 ist mit einem Abströmstutzen 5 versehen, über den in Pfeilrichtung 7 die gereinigte Ansaugluft in Richtung der Zylinder der Brennkraftmaschine weitergeleitet wird. Zur lösbaren Befestigung der beiden Gehäuseteile 3 und 4 aneinander sind Befestigungselemente 6 an der Außenseite vorgesehen, die insbesondere manuell befestigt bzw. gelöst werden können.

In Fig. 2 ist ein Filterelement 8 dargestellt, welches in das Filtergehäuse gemäß Fig. 1 einzusetzen ist. Das Filterelement 8 ist rechteckförmig ausgebildet, wobei die Stirnseiten die Roh- bzw. Reinseite bilden. Das nicht erfindungsgemäße Filterelement 8 ist von einem Rahmen 9 eingefasst, welcher Träger eines umlaufenden Dichtungselementes sein kann. Das Filterelement 8 bildet gemeinsam mit dem Rahmen 9 und ggf. dem umlaufenden Dichtungselement ein austauschbares Filtereinsatzteil 10.

Auf den Rahmen 9 kann ggf. auch verzichtet werden; in dieser Ausführung wird das umlaufende Dichtungselement, das beispielsweise aus PUR-Schaum besteht, direkt an das Filterelement angegossen.

Im Zentrum des Filterelementes 8 - bezogen auf die orthogonal zur Durchströmungsrichtung liegende Filterebene des Filterelements - befindet sich eine Ausnehmung 11, in die ein pfropfenförmiges Dämpfungselement 12 eingesetzt ist. Gegebenenfalls sind in das Filterelement 8 eine Mehrzahl von Ausnehmungen 11 zur Aufnahme derartiger Dämpfungselemente 12 eingebracht, wobei die Ausnehmungen sowohl symmetrisch als auch nicht-symmetrisch in das Filterelement eingebracht sein können. Die Ausnehmung 11 erstreckt sich zwischen der Roh- und der Reinseite des Filterelements. Das Dämpfungselement besteht zweckmäßigerweise aus dem gleichen Material wie das am Filterelement umlaufende Dichtelement, beispielsweise aus PUR-Schaum, und wird im gleichen Arbeitsgang wie das umlaufende Dichtelement hergestellt.

Wie der Schnittdarstellung gemäß Fig. 3 zu entnehmen, sind an der Innenseite jedes Gehäuseteils 3, 4 jeweils Gehäusedome 13 bzw. 14 angeformt, die einstückig mit dem jeweiligen Gehäuseteil ausgebildet sind. Ein erster Gehäusedom 13 befindet sich an der Innenseite des rohluftseitigen Gehäuseteils 4 und ragt in die Ausnehmung 11 ein, die in das Filterelement 8 eingebracht ist. Der zweite Gehäusedom 14 befindet sich an der Innenseite des reinluftseitigen Gehäuseteils 3, wobei in der Montageposition gemäß Fig. 3 die beiden konisch geformten Gehäusedome 13 und 14 koaxial zueinander ausgerichtet sind und die jeweiligen Stirnseiten der Gehäusedome einander zugewandt sind. Der zweite Gehäusedom 14 am reinluftseitigen Gehäuseteil 3 befindet sich unmittelbar im Bereich der reinluftseitigen Außenfläche des Filterelementes 8. Zwischen den Stirnseiten von Gehäusedom 13 und Gehäusedom 14 ist das Dämpfungselement 12 in die Ausnehmung 11 eingesetzt.

In der montierten Position werden über die Befestigungselemente 6 (Fig. 1) die Gehäuseteile 3 und 4 mit einer Klemmkraft aneinander gehalten, die quer zur Filterelementebene gerichtet ist. Diese Kraft wird auch über die beiden Gehäusedome 13 und 14 und das zwischenliegende Dämpfungselement 12 übertragen, wobei das Dämpfungselement 12 zumindest zu einem der unmittelbar benachbarten Gehäusedome 13, 14 nur auf losen Kontakt liegt, so dass mit dem Öffnen der äußeren Befestigungselemente die Gehäuseteile 3, 4 ohne weiteres voneinander entfernt werden können, so dass das Filterelement 8 zugänglich ist und aus dem Gehäuseinneren entfernt bzw. in das Gehäuseinnere eingesetzt werden kann.

Das Filterelement kann von dem Dämpfungselement im Zusammenspiel mit dem Gehäusedom an einem Gehäuseteil festgeklemmt sein, so dass beim Öffnen des Filtergehäuses das Filterelement mit der abzunehmenden Gehäusehälfte gelöst und insbesondere bei schwer zugänglichem Bauraum ein Elementwechsel erleichtert wird.

Das Filterelement kann aus gefaltetem Filtermaterial wie zum Beispiel Filterpapier bestehen. Es kommen aber auch andere Filtermedien bzw. Filterformen in Betracht, beispielsweise flächige Filterformen aus Vliesmaterial. Bei gefaltetem Filtermaterial sind die Gehäusedome zweckmäßigerweise so gestaltet, dass die Falten des Filterelements stabilisiert werden und somit zum Beispiel im Falle eines Wassereintrags nicht kollabieren.

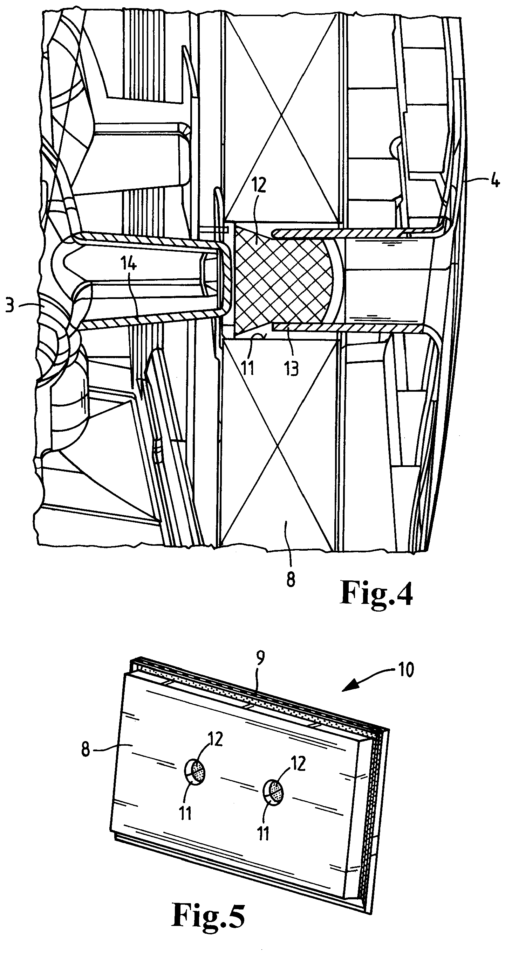

In Fig. 4 ist ein detaillierterer Schnitt durch ein nicht erfindungsgemäßes Filterelement 8 und die Gehäuseteile 3 und 4 dargestellt. Der rohluftseitige Gehäusedom 13 an dem rohluftseitigen Gehäuseteil 4 ragt in die Ausnehmung 11 im Filterelement 8 ein. Die Stirnseite des Doms 13 weist eine Ausnehmung auf, in die das stopfenförmige Dämpfungselement 12 eingesetzt ist. Das Dämpfungselement 12 befindet sich komplett innerhalb der Ausnehmung 11 im Filterelement 8.

Der zweite Gehäusedom 14 am reinluftseitigen Gehäuseteil 3 berührt mit seiner Stirnseite das Dämpfungselement 12. Im montierten Zustand wird das Dämpfungselement 12 von der Stirnseite des Gehäusedoms 14 in den Sitz in dem gegenüberliegenden Gehäusedom 13 gedrückt. Die Stirnseite des Gehäusedoms 14 liegt nur auf losem Kontakt mit dem Dämpfungselement 12, so dass bei der Demontage die Gehäusedome 13 und 14 voneinander entfernt werden können.

In Fig. 5 ist ein Filterelement 8 mit insgesamt zwei zueinander beabstandeten Ausnehmungen 11 dargestellt, in die jeweils ein stopfenförmiges Dämpfungselement 12 eingesetzt ist.

Der Filterkasten kann beispielsweise hochkant eingebaut werden, d.h. die Trennung zwischen Rohluftdeckel und gegenüberliegenden Gehäuseteil verläuft vertikal. Der Rohluftdeckel wird in diesem Fall nach dem Lösen der an der Oberseite zugänglichen Schrauben an einem Scharnier weggeschwenkt. Durch das am Deckel verklemmte und im Filterelement vergossene Dämpfungselement schwenkt das Filterelement mit dem Rohluftdeckel nach außen und kann in einfacher Weise entnommen werden.

## Patentansprüche

1. Filterelement (8), insbesondere Luftfilterelement, das ein austauschbares Filtereinsatzteil bildet für eine Filtereinrichtung zur Filtration gasförmiger Fluide, insbesondere Luftfiltration, zum Einsatz in einem mehrteiligen Gehäuse (2), wobei mindestens ein Gehäuseteil (3,4) mindestens einen Gehäusedom (13,14) aufweist, wobei das Filterelement (8) rechteckförmig ausgebildet ist, wobei ein umlaufendes Dichtungselement zur Trennung einer Roh- von einer Reinseite aus PUR-Schaum besteht, wobei das Dichtungselement direkt an das Filterelement (8) angegossen ist, **dadurch gekennzeichnet, dass** das Filterelement (8) zumindest eine Ausnehmung (11) aufweist und mithilfe des mindestens einen Gehäusedoms (13, 14) verspannbar ist, wobei sich die Ausnehmung (11) zwischen der Roh- und der Reinseite des Filterelementes (8) erstreckt, wobei in der zumindest einen Ausnehmung (11) ein Dämpfungselement (12) aufgenommen ist, welches als durchbrechungsfreier Dämpfungsstopfen ausgeführt ist, und aus einem schwingungsdämpfenden Material besteht, wobei das Dämpfungselement (12) aus PUR-Schaum besteht und in die Ausnehmung (11) eingegossen ist und im gleichen Arbeitsgang wie das umlaufende Dichtungselement hergestellt ist und wobei im montierten Zustand das Dämpfungselement (12) zwischen der Stirnseite des mindestens einen Gehäusedoms (13,14) und dem gegenüberliegenden Gehäuseteil (3,4) anordnenbar ist.

2. Filterelement (8) nach Anspruch 1, **dadurch gekennzeichnet, dass**
- die zumindest eine Ausnehmung (11) zentrisch in dem Filterelement (8) vorliegt und/oder
- das Filterelement (8) zwei oder mehr Ausnehmungen (11) aufweist, die zueinander beabstandet sind und/oder die symmetrisch oder nicht-symmetrisch in dem Filterelement (8) vorliegen.

3. Filterelement (8) nach zumindest einem der Ansprüche 1 oder 2, **dadurch gekennzeichnet, dass** das Filterelement (8)
- aus gefaltetem Filtermaterial, bevorzugt Filterpapier, besteht oder
- ein flächiges Filtermaterial, bevorzugt ein Vliesmaterial, aufweist.

4. Filtereinrichtung zur Filtration gasförmiger Fluide, insbesondere Luftfilter in Kraftfahrzeugen, mit einem in ein mehrteiliges Gehäuse (2) einsetzbaren Filterelement, wobei mindestens zwei Gehäuseteile (3, 4) im montierten Zustand miteinander verbunden sind, **dadurch gekennzeichnet, dass**
- eine das Filterelement (8) durchsetzende Verbindungseinrichtung für eine Verbindung zwischen den Gehäuseteilen (3, 4) vorgesehen ist und
- das Filterelement ein Filterelement (8) nach zumindest einem der Ansprüche 1 bis 3 ist, und
- die Verbindungseinrichtung mindestens einen einteilig mit einem Gehäuseteil (3, 4) ausgebildeten Gehäusedom (13, 14) umfasst, wobei zwischen der Stirnseite des Gehäusedoms (13, 14) und dem gegenüberliegenden Gehäuseteil (3, 4) das Dämpfungselement (12) des Filterelements (8) angeordnet ist.

## Claims

1. Filter element (8), in particular air filter element, which forms a replaceable filter insert for a filtering device for filtering gaseous fluids, in particular for filtering air, for being inserted into a multipart housing (2), wherein at least one housing component (3, 4) features at least one housing dome (13, 14), wherein the filter element (8) is rectangular, wherein a circumferential sealing element for separating a raw side from a clean side is made of PUR foam, wherein the sealing element is directly cast onto the filter element (8), **characterized in that** the filter element (8) features at least one recess (11) and is clampable using the at least one housing dome (13, 14), wherein the recess (11) extends between the raw side and the clean side of the filter element (8), wherein a damping device (12), which is designed as penetration-free damping plug and consists of a vibration-damping material, is received in the at least one recess (11), wherein the damping device (12) consists of PUR foam and is cast integrally into the recess (11) and produced in the same processing step as the circumferential sealing element and wherein, in mounted state, the damping device (12) can be disposed between the front face of the at least one housing dome (13, 14) and the opposing housing component (3, 4).

2. Filter element (8) according to claim 1, **characterized in that**
- the at least one recess (11) is centrically disposed in the filter element (8) and/or
- the filter element (8) features one or a plurality of recesses (11) which are spaced from one another and/or which are symmetrically or non-symmetrically disposed in the filter element (8).

3. Filter element (8) according to at least one of the claims 1 or 2, **characterized in that** the filter element (8)
- consists of folded filter material, preferably of filter paper, or
- features a flat filter material, preferably a non-woven fabric.

4. Filtering device for filtering gaseous fluids, in particular air filter in motor vehicles, having a filter element insertable into a multipart housing (2), wherein at least two housing components (3, 4) are connected to one another in mounted state, **characterized in that**
- a connecting means passing through the filter element (8) is provided for a connection between the housing components (3, 4) and
- the filter element is a filter element (8) according to at least one of the claims 1 to 3, and
- the connecting means comprises at least one housing dome (13, 14) realized in one piece with a housing component (3, 4), wherein the damping device (12) of the filter element (8) is disposed between the front face of the housing dome (13, 14) and the opposing housing component (3, 4).

## Revendications

1. Élément filtrant (8), notamment élément de filtre à air qui forme une cartouche filtrante échangeable pour un dispositif de filtration pour la filtration de fluides gazeux, notamment pour la filtration d'air, pour être insérée dans un boîtier multi-pièces (2), dans lequel au moins un composant de boîtier (3, 4) présente au moins un dôme de boîtier (13, 14), dans lequel l'élément filtrant (8) est rectangulaire, dans lequel un élément d'étanchéité circonférentiel pour séparer un côté brut d'un côté pur consiste en une mousse PUR, dans lequel l'élément d'étanchéité est directement moulé sur l'élément filtrant (8), **caractérisé en ce que** l'élément filtrant (8) présente au moins un évidement (11) et est déformable au moyen du dôme de boîtier (13, 14), au moins au nombre d'un, dans lequel l'évidement (11) s'étend entre le côté brut et le côté pur de l'élément filtrant (8), dans lequel un élément d'amortissement (12) est logé dans l'évidement (11), au moins au nombre d'un, lequel élément d'amortissement est conçu comme un bouchon d'amortissement sans perforation et consiste en un matériau amortisseur d'oscillations, dans lequel l'élément d'amortissement (12) consiste en une mousse PUR et est coulé intégralement dans l'évidement (11) et fabriqué lors de la même opération que l'élément d'étanchéité circonférentiel et dans lequel, en état monté, l'élément d'amortissement (12) peut être disposé entre la face frontale du dôme de boîtier (13, 14), au moins au nombre d'un, et le composant de boîtier (3, 4) opposé.

2. Élément filtrant (8) selon la revendication 1, **caractérisé ce que**
- l'évidement (11), au moins au nombre d'un, est disposé de manière centrée dans l'élément filtrant (8) et/ou
- l'élément filtrant (8) présente deux ou une pluralité d'évidements (11) qui sont espacés les uns des autres et/ou qui sont disposés de manière symétrique ou non symétrique dans l'élément filtrant (8).

3. Élément filtrant (8) selon au moins l'une des revendications 1 ou 2, **caractérisé en ce que** l'élément filtrant (8)
- consiste en un matériau filtrant plié, de préférence en un papier filtre ou
- présente un matériau filtrant plane, de préférence un matériau non-tissé.

4. Dispositif de filtration pour la filtration de fluides gazeux, notamment filtre à air dans des véhicules automobiles, ayant un élément filtrant insérable dans un boîtier multi-pièces (2), dans lequel au moins deux composants de boîtier (3, 4) sont reliés l'un à l'autre en état monté, **caractérisé en ce que**
- un moyen de raccordement traversant l'élément filtrant (8) est prévu pour un raccordement entre les composants de boîtier (3, 4) et
- l'élément filtrant est un élément filtrant (8) selon au moins l'une des revendications 1 à 3, et
- le moyen de raccordement comprend au moins un dôme de boîtier(13, 14) exécuté en une seule pièce avec un composant de boîtier (3, 4), dans lequel l'élément d'amortissement (12) de l'élément filtrant (8) est disposé entre la face frontale du dôme de boîtier (13, 14) et la partie du boîtier (3, 4) opposée.
